# EUROPEAN PATENT APPLICATION

(11) **EP 2 372 205 A1**
(43) Date of publication of application: **05.10.2011**
(21) Application number: 10445003.6
(22) Date of filing: 19.03.2010
(51) Int. Cl.: F16L 1/12

(54) **Underwater cable protection connector**

(71) Applicant: Helgesson, Björn, 45493 Brastad (SE); Meissingset, Sverre, 3125 Tönsberg (NO)
(72) Inventor: Helgesson, Björn, 45493 Brastad (SE); Meissingset, Sverre, 3125 Tönsberg (NO)

(57) **Abstract**

A connector (204) for interconnecting a plurality of concrete elements in a protective structure for an underwater installation. First and second connecting members (205,206) of first (201) and second (202) concrete elements have openings (210',210",211) for the insertion of a connecting element (209) for interlocking, so as to make the connector articulated in a first plane. First and second inwardly facing surfaces of the first connecting member and at least one rounded body (207) of the second connecting member (206) makes the connector articulated in a second plane, within a predetermined angular range (±α), at a right angle to the first plane. The rounded body (207) is provided on a shaft portion (208) so as to form a first continuous contact line (A) between the first inwardly facing surface and the rounded body (207) and so as to form a second contact line (B) between the second inwardly facing surface and the shaft portion (208) in order to limit an axial rotation between the longitudinal axes of the concrete elements (201,202) to be smaller than the predetermined angular range.

## Description

### TECHNICAL FIELD

The present invention relates to a connector for interconnecting a plurality of concrete elements in a protective structure for an underwater installation. The invention also relates to a concrete element for use in such a protective structure, and a method for interconnecting a plurality of such concrete elements.

### BACKGROUND OF THE INVENTION

Underwater installations, such as cables and pipelines without any overlying protection, are at great risk of being damaged or displaced out of position by sea currents or fishing implements, e.g. trawls, which are dragged over them. Accordingly, it has become more and more common to cover underwater installations with suitably designed protective elements, which are laid in a long row over the underwater installation. The protective elements are advantageously laid at the same time as the underwater installation itself.

Different types of protective elements for underwater installations are previously known. Some previously known types of such protective elements are described in the patent publications WO 2005/078325 A1, US 6 349 808 B1 and US 4 242 010.

Some of the previously known protective structures have to be covered with gravel or sand or bottom sediment after the laying operation, in order to provide sufficient stability and protecting ability for the underwater installation. This requires more working steps and higher material input, and increases the cost of the protective structure. Furthermore, underwater digging and filling operations often result in a loose bottom structure, which is susceptible to influence from sea currents and to be washed away.

Elements of reinforced concrete are advantageous with respect to stability and protecting ability, and generally do not require any covering with gravel or the like.

However, the previously known concrete elements have certain disadvantages. Such a disadvantage is that concrete elements with a larger length than about a metre produce a row with a relatively large minimum radius of curvature, for downward deflection of the row during the laying operation, and thus require the use of lifting cranes or winches which are relatively high, or at least placed high up, in order not to cause the laying operation to become very inexact due to an excessively large distance to the landing spot of the concrete elements on the bottom surface. The large radius of curvature, in its turn, requires the use of a relatively large ship, which can be a disadvantage for laying operations in narrow passages or in shallow waters. This problem can be reduced by making the concrete elements shorter in the laying direction than in the width direction, but this will result in a larger number of concrete elements per unit of length unit and thus a more expensive protective installation.

Another problem with the previously known concrete elements is that the laying operation requires the use of a long laying cable which is removed after the laying operation. The length of the laying cable has to be larger than the length of the protective structure which is to be laid, and the long cable is very heavy and cumbersome to handle.

Another disadvantage of the prior art is that it may be difficult to lay a row of concrete elements in a protective structure on a bottom surface with a desired radius of curvature of the completed protective structure, since the concrete elements, during the laying operation, are interconnected to each other via a flexible wire or other connection of a type allowing the concrete elements to move relatively freely relative to each other during the laying operation.

Still another disadvantage of the prior art is that the concrete elements in a long row of concrete elements, during the laying operation, risk rotating excessively relative to each other, so that the concrete elements end up laying on the side or, in the worst case, upside down, after the laying operation. Furthermore, such an uncontrolled axial rotation can result in the cable or pipeline which is to be protected being damaged during the laying operation or being left unprotected after the laying operation.

### SUMMARY OF THE INVENTION

Thus, a first object of the present invention is to provide a connector for interconnecting a plurality of concrete elements in a protective structure for an underwater installation, which connector provides a controlled operation of laying the concrete elements which ensures a desired radius of curvature of the laid protective structure.

This first object is achieved by means of a connector according to claim 1, which comprises at least a first connecting member of a first concrete element and a second connecting member of a second concrete element, wherein the connecting members exhibit openings for the insertion of a connecting element for interlocking the connector so as to make the connector articulated in a first plane after the interconnection, wherein the connecting members are designed with a first and a second inwardly facing surface of the first connecting member and at least one rounded body of the second connecting member so as to form at least one continuous contact line between the inwardly facing surfaces and the rounded body and to make the connector articulated in a second plane, within a predetermined angular range, wherein the second plane extends at a right angle to the first plane, and wherein the rounded body is provided on a shaft portion of the second connecting member so as to form a first continuous contact line between the first inwardly facing surface of the first connecting member and the rounded body and so as to form a second contact line between the second inwardly facing surface of the first connecting member and the shaft portion when the connector exhibits an angle in the second plane corresponding to an end position of the predetermined angular range in order to limit an axial rotation of the longitudinal axis of the second concrete element relative to the longitudinal axis of the first concrete element so that the axial rotation is smaller than the predetermined angular range.

A second object of the present invention is to provide a connector for interconnecting a plurality of concrete elements in a protective structure for an underwater installation, which connector ensures that the concrete elements are turned right side up during the laying operation and in the completed protective structure and minimizes the risk of the underwater installation being damaged during or after the laying operation.

This second object is achieved by means of a connector according to claim 9, in which the first and second connecting members are designed so as to allow an axial rotation of the longitudinal axis of the second concrete element relative to the longitudinal axis of the first concrete element which is no greater than 4.5°, more advantageously no greater than 1.5°, after the interconnection.

A third object of the present invention is to provide a concrete element for a protective structure for an underwater installation, which concrete element enables simple and reliable interconnection of such concrete elements in a row and a controlled operation of laying the row of interconnected concrete elements in a protective structure with a desired radius of curvature without using any long cable.

This third object is achieved by means of a concrete element according to claim 11, which is designed as an elongated, curved shell segment having two ends, a bottom side between the ends designed with a longitudinal cavity for receiving the underwater installation when laying the concrete element, a top side between the ends, and at least two through-going apertures from the top side to the cavity, wherein the concrete element exhibits a second connecting member designed for interconnection with a first connecting member of a first concrete element, in a connector for interconnecting the concrete elements in the protective structure, wherein the connecting members exhibit openings for the insertion of a connecting element for interlocking the connector so as to make the connector articulated in a first plane after the interconnection, and wherein the second connecting member is designed with at least one rounded body so as to form at least one continuous contact line against a first and/or a second inwardly facing surface of the first connecting member of the first concrete element and to make the connector articulated in a second plane, within a predetermined angular range, wherein the second plane extends at a right angle to the first plane, and wherein the rounded body is provided on a shaft portion of the second connecting member and is adapted to form a first continuous contact line against the first inwardly facing surface of the first connecting member of the first concrete element, and the shaft portion is adapted to form a second contact line against the second inwardly facing surface of the first connecting member of the first concrete element when the connector exhibits an angle in the second plane corresponding to an end position of the predetermined angular range in order to limit an axial rotation of the longitudinal axis of the concrete element relative to the longitudinal axis of the first concrete element so that the axial rotation is smaller than the predetermined angular range.

A fourth object of the present invention is to provide an improved method for interconnecting a plurality of concrete elements.

This fourth object is achieved by means of a method according to claim 15, while using a connector comprising at least a first connecting member of a first concrete element and a second connecting member of a second concrete element, wherein the connecting members exhibit openings for the insertion of a connecting element for interlocking the connector so as to make the connector articulated in a first plane after the interconnection, wherein the connecting members are designed with a first and a second inwardly facing surface of the first connecting member and at least one rounded body of the second connecting member so as to form at least one continuous contact line between the inwardly facing surfaces and the rounded body and to make the connector articulated in a second plane, within a predetermined angular range, wherein the second plane extends at a right angle to the first plane, and wherein the rounded body is provided on a shaft portion of the second connecting member so as to form a first continuous contact line between the first inwardly facing surface of the first connecting member and the rounded body and so as to form a second contact line between the second inwardly facing surface of the first connecting member and the shaft portion when the connector exhibits an angle in the second plane corresponding to an end position of the predetermined angular range in order to limit an axial rotation of the longitudinal axis of the second concrete element relative to the longitudinal axis of the first concrete element so that the axial rotation is smaller than the predetermined angular range, and wherein at least one of the connecting members exhibits an opening having an elongated shape in a direction which is substantially parallel to an alignment plane, and wherein the method comprises moving the first and second connecting members to a predefined, preferably parallel-aligned, first position relative to each other in which the second connecting member abuts against the first concrete element and in which the connector is interlocked by inserting the connecting element through the opening, wherein the first and second connecting members, after the interlocking, can be moved to other positions relative to each other in which the second connecting member has been pulled outward to a distance from the first concrete element and in which the connector exhibits an angle within the predetermined angular range in the alignment plane.

Further objects of the invention and the features making it possible to reach these objects will be apparent from the following description.

### BRIEF DESCRIPTION OF THE DRAWINGS

In the following, the invention will be described by means of a number of different embodiments with reference to the attached drawings, in which
Figure la is a schematic side view illustrating the operation of laying interconnected concrete elements according to the invention in a protective structure for an underwater installation,
Figure 1b is a schematic illustration of the laying operation of Figure la as viewed from above,
Figure 2a is a schematic perspective view of a concrete element according to a preferred embodiment of the invention,
Figure 2b is a schematic side view of the concrete element of Figure 2a,
Figure 2c is a schematic view of the concrete element of Figure 2a as viewed from below,
Figure 2d is a schematic view of an end of the concrete element of Figure 2a, which is provided with a first connecting member,
Figure 2e is a schematic view of the opposite end of the concrete element of Figure 2a, which is provided with a second connecting member,
Figures 2f and 2g are schematic side views of the connecting members of two concrete elements according to the invention which are to be interconnected while using a connector according to the invention,
Figure 2h is a schematic view, viewed from above, of the connecting members of Figures 2f and 2g after having been moved to a relative position for interlocking,
Figure 2i is a schematic side view of a key-shaped connecting element for interlocking the connecting members shown in Figure 2h,
Figure 2j is a schematic view, viewed from above, of a connector according to a preferred embodiment of the invention, after interlocking the respective connecting members by means of the connecting element of Figure 2i,
Figure 2k is a schematic side view of the connector of Figure 2i, and schematically illustrates two continuous contact lines between the first and second connecting members, and
Figure 3 is a schematic view, viewed from above, of a connector according to an alternative embodiment of the invention.

### DESCRIPTION OF EMBODIMENTS OF THE INVENTION

In the following, a number of embodiments of a connector according to the invention will be described in greater detail with reference to the attached Figures la-3.

The connector 104; 204; 304 according to the invention is intended for interconnecting a plurality of concrete elements 101, 102; 201, 202; 301, 302 in a protective structure 103 for an underwater installation, for example a cable or pipeline.

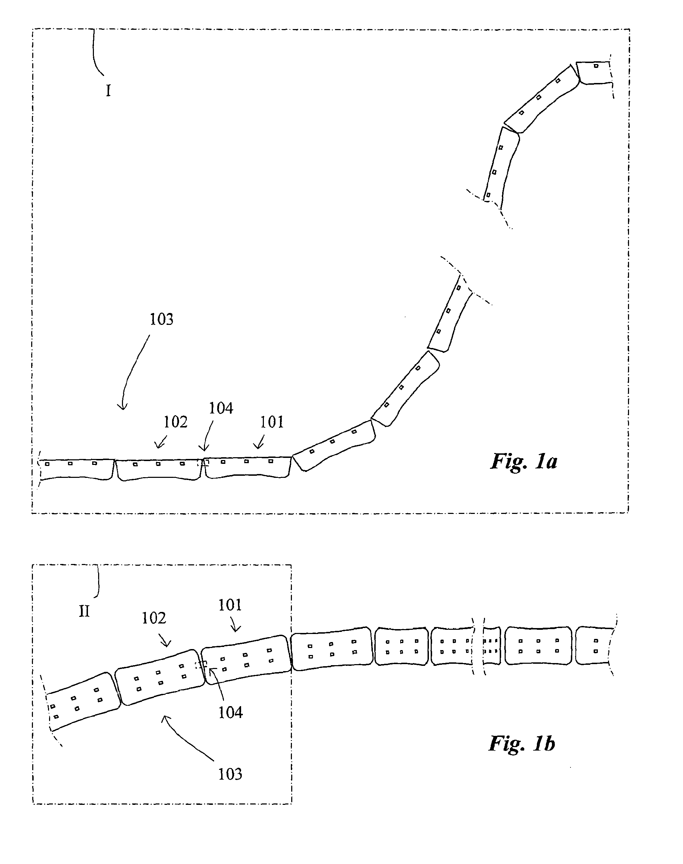

The dash-dotted frame in Figure la symbolizes a first plane I, which is preferably a plane extending from a laying ship (not shown in the Figure) downward toward a bottom surface (not shown) upon which the concrete elements 101, 102 will rest after the laying operation. The dash-dotted frame in Figure 1b symbolizes a second plane II, which is preferably extending substantially in parallel to the bottom surface upon which the concrete elements are resting after the laying operation.

The connector 104; 204, 304 comprises at least a first connecting member of a first concrete element 101; 201; 301 and a second connecting member of a second concrete element 102; 202; 302, wherein the connecting members are designed so as to make the connector articulated in the above-mentioned first plane I after the interconnection. According to the present invention, the first 205', 205"; 305', 305" and second 206; 306 connecting members are of design which, furthermore, makes the connector 104; 304, 304 articulated in the above-mentioned second plane II, within a predetermined angular range ±a, wherein the second plane II extends at a right angle to the first plane I. Furthermore, according to the present invention, the first and second connecting members are designed in order to limit an axial rotation of the longitudinal axis of the second concrete element 102; 202; 302 relative to the longitudinal axis of the first concrete element 101; 201; 301 so that the axial rotation is smaller than said predetermined angular range ±a.

The predetermined angular range provided by the connector according to the invention gives a controlled operation of laying the concrete elements which ensures a desired radius of curvature of the completed protective structure in that the angle and also the rotational angle between two interconnected concrete elements can be set to remain within a suitable range. In addition, this prevents excessively large openings from being formed between the concrete elements in such positions where the protective structure for some reason has to be laid in a curve shape with a small radius of curvature and minimizes the risk of an underlying cable or pipeline being exposed unnecessarily.

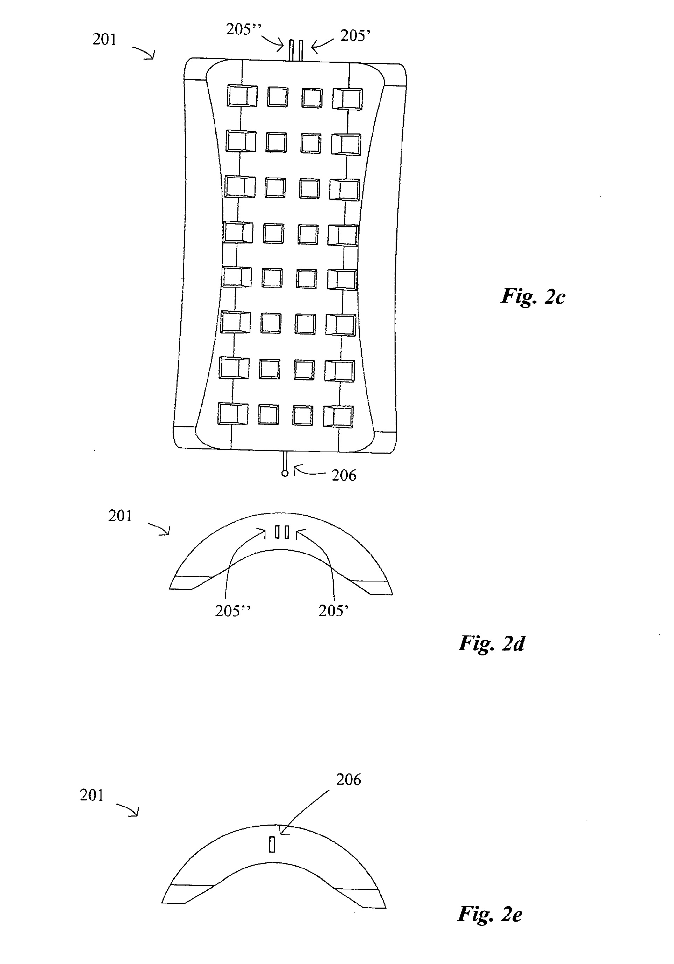

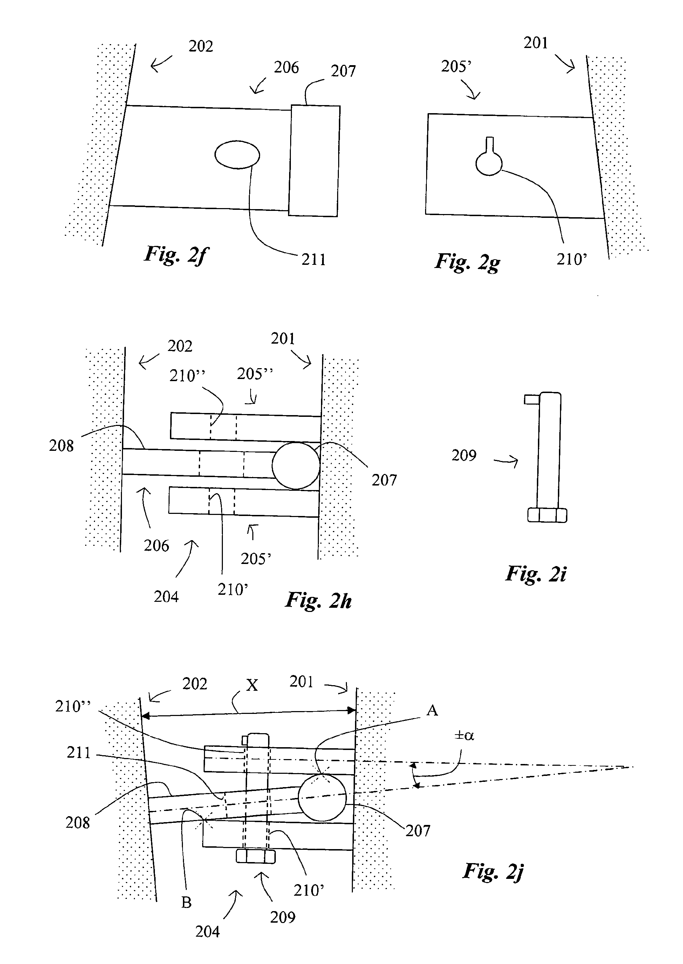

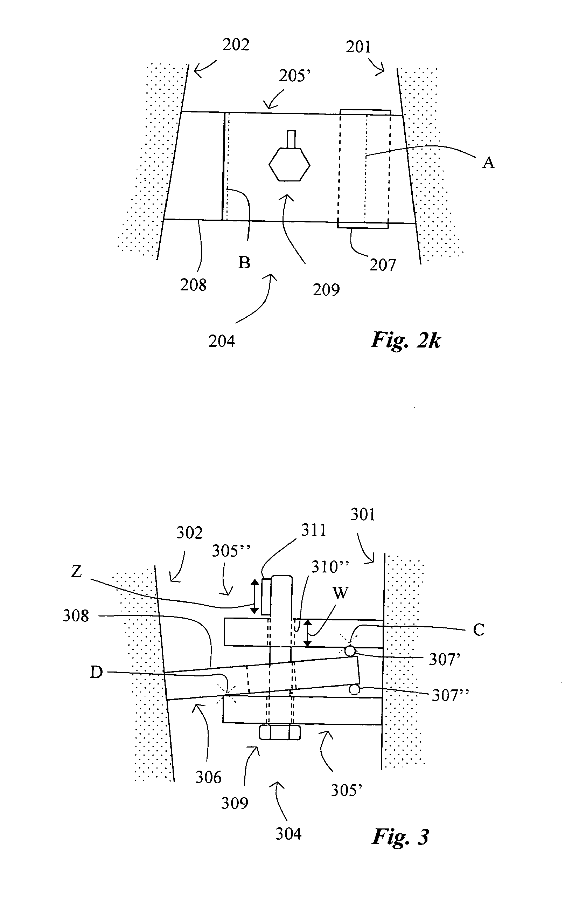

In a preferred embodiment of the connector 204; 304 according to the invention, as illustrated by Figures 2j, 2k and 3, the first 205', 205"; 305', 305" and second 206; 306 connecting members are designed for abutment against each other along at least one continuous contact line A, B; C, D always when the connector exhibits an angle within said predetermined angular range ±α. Such a continuous contact line makes the connector torsionally stiff and minimizes the risk of an excessive axial pivoting, in the worst case rotation, between the concrete elements in connection with the laying operation. Continuous contact line should be understood as considerably longer than a discrete contact point and a suitable length of such a contact line can be of the order of 50-150 mm, preferably about 100 mm.

In the preferred embodiment of the connector according to the invention, as illustrated by Figure 2j and 2k, the first 205', 205" and second 206 connecting members are designed for abutment against each other in at least two separate contact lines A, B when the connector exhibits an angle in the second plane II corresponding to an end position of said predetermined angular range ±a. Such a design makes the connector 204 very resistant to axial rotation between the concrete elements 201, 202 when the laying operation takes place with the smallest possible radius of curvature of the laid protective structure and thereby with the largest possible angle between the longitudinal axes of the interconnected concrete elements.

The first 205', 205"; 305', 305" and second 206; 306 connecting members being part of the connector 204; 304 according to the invention are preferably designed so as to enable that at least one continuous contact line A, B; C, D between the connecting members extends substantially in parallel to the first plane I after the interconnection. Thus, according to the invention, each connector in a row of interconnected concrete elements will exhibit at least one such continuous contact line which is parallel to a plane extending from the laying ship downward toward the bottom surface. This feature gives the row of interconnected concrete elements a high resistance against excessive relative axial pivoting between the concrete elements during the entire laying operation.

In the preferred embodiment of the connector 204; 304 according to the invention, the first and second connecting members are designed so as to form at least one continuous contact line A, B; C, D between at least one inwardly facing surface of the first connecting member 205', 205"; 305', 305" and at least one rounded body 207; 307', 307" of the second connecting member 206; 306. Such a rounded body enables a continuous abutment along a continuous contact line (more exactly a succession of successive contact lines) within the entire predetermined angular range ±α and ensures that the connector remains torsionally stiff within this entire angular range.

The first and second connecting members being part of the connector 204; 304 according to the invention are particularly advantageously designed so as to form a first continuous contact line A, B between a first inwardly facing surface of the first connecting member 205"; 305" and a rounded body 207; 307' on a shaft portion 208; 308 of the second connecting member, and so as to form a second contact line B; D between a second inwardly facing surface of the first connecting member 205'; 305' and said shaft portion 208; 308 when the connector 204; 304 exhibits an angle in the second plane II corresponding to an end position of said predetermined angular range ±α. Such a design can be advantageous, for instance, for manufacturing technology and economic reasons, since the shaft portion and the rounded body can be manufactured by welding together pieces of commercially available profile elements having a desired cross-sectional shape.

In one advantageous embodiment, the first connecting member of the connector 204; 304 according to the invention comprises a pair of spaced apart flat bars 205', 205"; 305', 305", projecting from a first end of the first concrete element 201; 301. Advantageously, the first connecting member exhibits a funnel-like shape in order to facilitate the insertion of the second connecting member during interconnection. Such a funnel-like shape can, for example, be accomplished by the flat bars being bevelled or bent outward at their outer ends in a suitable way.

In a particularly advantageous embodiment, the second connecting member 206; 306 exhibits at least one cylindrical body 207; 307', 307". In another advantageous embodiment, the second connecting member comprises at least one round bar 207; 307', 307" welded to a flat bar 208; 308, projecting from a second end of the second concrete element 202; 302. The use of such commercially available structural elements is economically advantageous.

In the preferred embodiment, the connector 204; 304 according to the invention comprises at least one connecting element 209; 309 for interlocking the connector, wherein at least one of the connecting members 205', 205"; 206; 305" of the connector exhibits an opening 210', 210", 211; 310" for the insertion of said connecting element 209; 309 during interlocking. In a particularly preferred embodiment, at least one of the connecting members 205', 205"; 305" exhibits at least one opening 210', 210"; 310" having a keyhole shape, wherein the connecting element 209; 309 is designed as a key for insertion through said opening during interlocking. Such a design enables a very quick interlocking of the connector and thereby a more rapid interconnection and laying of the concrete elements. By providing the connecting element with a suitable key-shape, interacting with one or several suitably designed keyhole openings in one or several of the connecting members, the risk that the interlocking of the connector is accidentally released can be made minimal.

In an even more advantageous embodiment of the connector 304 according to the invention, as illustrated by Figure 3, at least one of the connecting members 305" has a thickness W and at least one through-going keyhole opening 310", wherein the connecting element 309 exhibits a locking 311 for insertion through the keyhole opening 310", and the locking tongue 311 has a length Z in the longitudinal direction of the connecting element 309 which is larger than the thickness W of said connecting member 305". By designing the connecting element 309 in this way, the risk that the locking tongue 311 of the connecting element accidentally passes all the way through the keyhole opening 310" so that the connecting members 305", 306 separate from each other is minimized.

In the preferred embodiment of the connector 204 according to the invention, as illustrated in Figure 2h and 2j together, at least one of the connecting members 206 exhibits an opening 211 having an elongated shape in a direction which is substantially parallel to the second plane II, so that the first 205', 205" and second 206 connecting members can be moved to a predefined, preferably parallel-aligned, first position relative to each other for interlocking the connector 204, and so that the first and second connecting members, after the interlocking, can be moved to other positions relative to each other in which the connector 204 exhibits an angle within said predetermined angular range ±a. Such an elongated opening 211 enables the connecting members to be moved to a defined "interlocking position", as is shown in Figure 2h where the round bar 207 abuts against the end surface of the first concrete element 201. Furthermore, the elongated opening 211 enables a defined "laying position" in which the round bar 207 has been pulled outward to a distance from the end surface of the first concrete element 201 so that the connector 204 can be articulated within the predetermined angular range ±α during the laying operation.

The first 205', 205"; 305', 305" and second 206; 306 connecting members being part of the connector 204; 304 according to the invention are preferably designed so that the predetermined angular range ±a corresponds to an angle of ± 20° or less between the respective longitudinal axes of a first 101; 201; 301 and a second 102; 202; 302 concrete element which have been interconnected. This ensures that the openings between the laid concrete elements do not become excessively large and that the underlying cable or pipeline remains protected after the laying operation. The first 205', 205"; 305', 305" and second 206; 306 connecting members are preferably designed so as to allow a space between the first 101; 201; 301 and second 102; 202; 302 concrete element which is no greater than 80 mm after the interconnection.

Furthermore, the first and second connecting members are preferably designed so as to allow an axial rotation of the longitudinal axis of the second concrete element 102; 202; 302 relative to the longitudinal axis of the first concrete element 101; 201; 301 which is no greater than 4.5°, more advantageously no greater than 1.5°, after the interconnection. This minimizes the risk that the concrete elements end up laying on the side or upside down in the laid protective structure and ensures that the cable or pipeline which is to be protected is not damaged during the laying operation.

The first 205', 205'; 305', 305" and second 206; 306 connecting members of the connector 204; 304 according to the invention are preferably of a design enabling the second plane II to extend substantially perpendicularly to the first plane I after the interconnection.

In the preferred embodiment of the connector 104; 204; 304 according to the invention, the first 205', 205"; 305', 305" and second 206; 306 connecting members are designed so as to enable a radius of curvature in the second plane II which is below 200 metres and preferably between 10 and 25 metres in a row 103 of laid, interconnected concrete elements. A radius of curvature within the range 10-25 metres makes it possible to lay a row of interconnected concrete elements in a desired curve shape on a bottom surface without the openings between the concrete elements becoming excessively large or risk of the cable or pipeline being damaged during the laying operation.

Preferably, the connector 104; 204; 304 according to the invention is dimensioned to carry a load of at least 5000 kg. Such a dimensioning ensures that the connector does not break when laying normal-sized concrete elements without any special laying cable extending through the entire row of concrete elements.

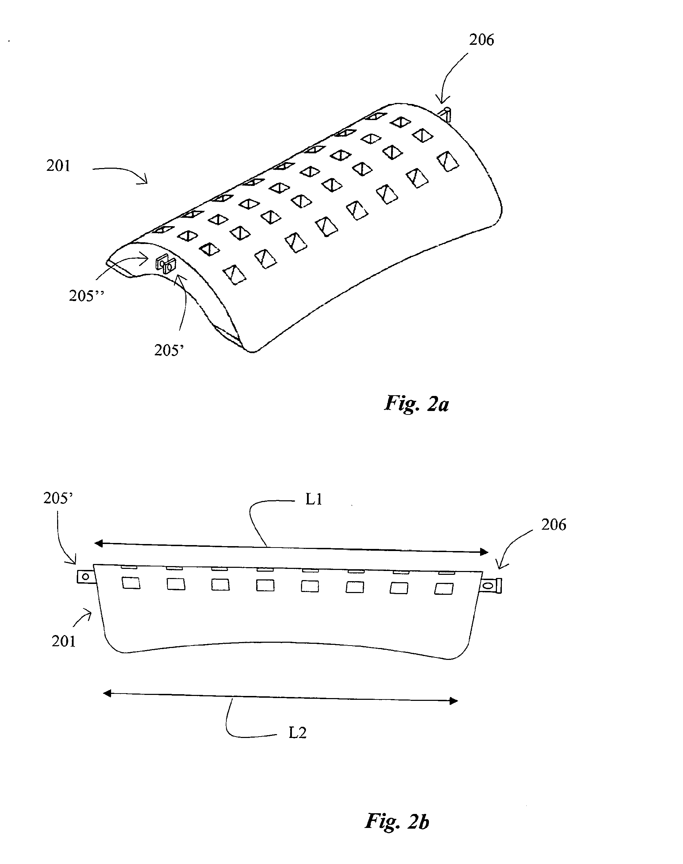

One of the objects of the present invention is to provide a concrete element for a protective structure for an underwater installation which utilizes the advantages provided by the connector according to the invention. As is evident from Figures 2a-2e, the concrete element is designed as an elongated, curved shell segment having two ends, a bottom side between the ends designed with a longitudinal cavity for receiving the underwater installation when laying the concrete element, a top side between the ends, and at least two through-going apertures from the top side to the cavity. Furthermore, the concrete element 101; 201; 301 according to the invention exhibits at least one connecting member 205', 205", 206; 305', 305" designed to be part of a connector 104; 204; 304 according to the invention as described in the foregoing. The concrete element according to the invention enables simple and reliable interconnection of such concrete elements in a row by means of connectors according to the invention, and a controlled operation of laying the row of interconnected concrete elements in a protective structure with a desired radius of curvature without using any long laying cable.

In a preferred embodiment of the concrete element 201, it is characterized in that the projection of the ends is inclined so that the top side becomes longer than the bottom side. This is illustrated schematically in Fig. 2b by the two arrows L1 (the length of the top side) and L2 (the length of the bottom side), respectively, wherein it is evident from the Figure that L1 > L2. Such a design enables a smaller radius of curvature, for downward deflection of a row of interconnected concrete elements during the laying operation, since the inclination of the ends enables a larger downward deflection angle that otherwise would be possible. This eliminates the need of high cranes or winches which become necessary when the radius of curvature, for downward deflection of a row of concrete elements, is excessively large, as is often the case with previously known concrete elements.

The concrete element 201 preferably has a first connecting member 205', 205" arranged at one end and a second connecting member 206 arranged at the other end. This enables interconnection and laying of an optional number of concrete elements in a protective structure having a desired length without using any long laying cable.

In the preferred embodiment of the concrete element according to the invention, the connecting members 205', 205", 206 are formed by, or are attached to, projecting ends of a longitudinal reinforcement element (not shown in the Figures) extending inside the concrete element. This ensures that the concrete element is not broken off during the laying operation and also makes it possible to form cheap connecting members from protruding ends of reinforcement bars or to attach separate connecting members to the ends.

In the preferred embodiment of the invention, the connecting members 205', 205", 206 are of a design which allows suspension and/or fixing of a portion of an underwater installation (not shown in the Figures) thereto when laying a plurality of concrete elements in a row. Such a design enables the underwater installation to be fixed in position at regular intervals relative to the overlying protective structure of interconnected concrete elements according to the invention. In the preferred embodiment, the connecting members 205', 205", 206 are designed so as to be enclosed by a sling (not shown in the Figures). This enables a portion of the underwater installation, such as a cable, to be suspended from the sling in a simple, inexpensive and rapid way. Another advantage with such a flexible sling suspension is that the cable can move sufficiently after the suspension to avoid that it is damaged by excessive tensile or bending forces, or jerks from the concrete elements, during the laying operation.

Another object of the present invention is to provide an improved method for interconnecting a plurality of concrete elements. The method according to the invention is carried out while using a connector 104; 204; 304 comprising at least a first connecting member of a first concrete element 101; 201; 301 and a second connecting member of a second concrete element 102; 202; 302, wherein at least one of the connecting members 206 exhibits an opening 211 having an elongated shape in a direction which is substantially parallel to an alignment plane, which enables the first 205', 205" and second 206 connecting members to be moved to a predefined, preferably parallel-aligned, first position relative to each other in which the connector 204 is interlocked, and that the first 205', 205" and second 206 connecting members, after the interlocking, can be moved to other positions relative to each other in which the connector 204 exhibits an angle within a predetermined angular range ±α in the alignment plane.

In a preferred embodiment of the method according to the invention, the connector 204 comprises at least one connecting element 209 for interlocking said connector, wherein at least one of the connecting members 205', 205", 206 exhibits an opening 210', 210"; 211 through which the connecting element 209 is inserted during interlocking. In a particularly preferred embodiment, the opening 210', 210" has a keyhole shape, wherein the connecting element 209 is designed as a key which is inserted through the opening during interlocking.

In another advantageous embodiment of the method according to the invention, at least one of the connecting members 305" exhibits a thickness W and at least one through-going keyhole opening 310", wherein the connecting element 309 exhibits a locking tongue 311 which is inserted through the keyhole opening 310", and the locking tongue 311 has a length Z in the longitudinal direction of the connecting element 309 which is larger than the thickness W of said connecting member 305".

The operation of laying concrete elements according to the invention is not shown in detail in the Figures, but can be carried out from any suitable laying ship. The laying operation is advantageously carried out by means of a lifting device for placing the concrete elements on an alignment plane, where the first 205', 205" and second 206 connecting members are moved to the correct position for the interlocking of the connector 204 according to the invention. The lifting device is advantageously a travelling crane, but can also be another suitable device. The alignment plane can comprise suitably arranged guides or stoppers to facilitate the positioning of the concrete elements in the correct position for the interconnection.

The laying device (not shown in the figures) of the ship advantageously comprises a conveyor belt which transports the interconnected concrete elements further on from the alignment plane in a direction towards a laying element outside the railing of the ship. The conveyor belt is preferably provided with braking devices, e.g. braking rollers running in contact with the row of concrete elements, in order to control the output speed of the interconnected concrete elements in a direction towards the laying element.

The laying element (not shown in the Figures) advantageously comprises a guiding means, hinged from the railing of the ship, after the output end of the conveyor belt, wherein the guiding means has at least one passage through which the interconnected concrete elements pass when being laid in the water. In this context, "passage" should be understood as the guiding means having a geometrical shape which retains and controls the direction of the row of concrete elements, at least "laterally", during the laying operation. The guiding means is arranged such that it, in a down-turned position, is at least partially below the water surface during the laying operation. The guiding means preferably can be turned to a desired laying angle, at least "vertically". During the laying operation, the laying angle of the row of interconnected concrete elements will be aligned with the guiding means slightly below the water surface, after which the row of interconnected concrete elements will travel without any further guidance down toward the bottom surface of the sea or water course. Such a method is particularly well suited for laying operations in lesser water depths, or when the final positioning of the concrete elements and the underlying installation on the bottom surface is less critical, for example when the bottom conditions are constant during the entire laying operation.

The guiding means can also be arranged at the outer end of an arm having a fixed length which is hinged from the railing of the ship, wherein the arm has at least one passage through which the interconnected concrete elements pass on their way to the guiding means. The arm and the attached guiding means can be turned to a desired laying angle. The arm having a fixed length can have a total length within the range 30-35 metres and advantageously consists of separate structural elements joined together by means of wires. The arm can advantageously exhibit buoyancy, but sink toward the bottom surface when the operation of laying interconnected concrete elements starts. Such a method is suitable for medium water depths and when the exact positioning of the laid row of concrete elements is important, e.g. in varying bottom conditions.

At even greater water depths and/or when the exact positioning of the laid row of concrete elements is particularly critical, the guiding means can be arranged at the outer end of a telescopic arm having an adjustable length which is hinged from the railing of the ship, wherein the arm has at least one passage through which the interconnected concrete elements pass on their way to the guiding means. This enables the telescopic arm and the attached guiding means to be maintained at a desired laying angle irrespective of varying water depth, by adjusting the length of the telescopic arm. Advantageously, the length of the telescopic arm can be adjusted within the range 10-30 metres. The guiding means and/or the arm close to the guiding means can advantageously have means for clearing the bottom surface upon which the interconnected concrete elements and the underwater installation will rest after the laying operation. The guiding means and/or the arm close to the guiding means can be provided with at least one camera and illuminating means for inspection of the bottom surface and/or observation of the laying operation. A winch device can be connected to the guiding means and/or the arm for folding up the arm during transport and folding down the arm during the laying operation.

In the foregoing, the present invention has been described with the aid of a number of different embodiments and with reference to the attached drawings. It should be understood, however, that the invention is not limited to the described embodiments and to what is shown in drawings, and that other embodiments are conceivable within the scope of the invention as it is defined by the following claims.

## Claims

1. A connector, for interconnecting a plurality of concrete elements (101, 102; 201, 202; 301, 302) in a protective structure (103) for an underwater installation, said connector (104; 204, 304) comprising at least a first connecting member of a first concrete element (101; 201; 301) and a second connecting member of a second concrete element (102; 202; 302), wherein said connecting members (205', 205", 206; 305', 305", 306) exhibit openings (210', 210", 211; 310") for the insertion of a connecting element (209; 309) for interlocking said connector so as to make the connector articulated in a first plane (I) after the interconnection,
**characterized in**
**that** the connecting members are designed with a first and a second inwardly facing surface of the first connecting member (205', 205"; 305', 305") and at least one rounded body (207; 307', 307") of the second connecting member (206; 306) so as to form at least one continuous contact line between said inwardly facing surfaces and said rounded body and to make the connector articulated in a second plane (II), within a predetermined angular range (±a), wherein said second plane (II) extends at a right angle to the first plane (I), and
**that** said rounded body (207; 307', 307") is provided on a shaft portion (208; 308) of the second connecting member so as to form a first continuous contact line (A; C) between said first inwardly facing surface of the first connecting member (205"; 305") and said rounded body (207; 307') and so as to form a second contact line (B; D) between said second inwardly facing surface of the first connecting member (205'; 305') and the shaft portion (208; 308) when the connector (204; 304) exhibits an angle in the second plane (II) corresponding to an end position of said predetermined angular range (±α) in order to limit an axial rotation of the longitudinal axis of the second concrete element (102; 202; 302) relative to the longitudinal axis of the first concrete element (101; 201; 301) so that the axial rotation is smaller than said predetermined angular range (±a).

2. The connector according to claim 1,
c h a r a c t e r i z e d i n that the first (205', 205"; 305', 305") and second (206; 306) connecting members are designed for abutment against each other along at least one continuous contact line (A, B; C, D) always when the connector exhibits an angle within said predetermined angular range (±a).

3. The connector according to claim 1 or 2,
**characterized in that** the first (205', 205") and second (206) connecting members are designed for abutment against each other in at least two separate contact lines (A, B) when the connector exhibits an angle in the second plane (II) corresponding to an end position of said predetermined angular range (±α).

4. The connector according to any one of the preceding claims,
**characterized in that** the first (205', 205"; 305', 305") and second (206; 306) connecting members are designed so as to enable that at least one continuous contact line (A, B; C, D) between the connecting members extends substantially in parallel to the first plane (I) after the interconnection.

5. The connector according to any one of the preceding claims,
**characterized in that** the first connecting member comprises a pair of spaced apart flat bars (205', 205"; 305', 305"), projecting from a first end of the first concrete element (201; 301).

6. The connector according to any one of the preceding claims,
**characterized in that** the second connecting member comprises at least one round bar (207; 307', 307") welded to a flat bar (208; 308), projecting from a second end of the second concrete element (202; 302).

7. The connector according to any one of the preceding claims, comprising at least one connecting element (209; 309) for interlocking said connector,
**characterized in that** at least one of the connecting members (205', 205"; 305") exhibits at least one opening (210', 210"; 310") having a keyhole shape, and that the connecting element (209; 309) is designed as a key for insertion through said opening during interlocking.

8. The connector according to any one of the preceding claims,
**characterized in that** at least one of the connecting members (206) exhibits an opening (211) having an elongated shape in a direction which is substantially parallel to the second plane (II), so that the first (205', 205") and second (206) connecting members can be moved to a predefined, preferably parallel-aligned, first position relative to each other for interlocking the connector (204) and in which the second connecting member abuts against the first concrete element, and so that the first and second connecting members, after the interlocking, can be moved to other positions relative to each other in which the second connecting member has been pulled outward to a distance from the first concrete element and in which the connector (204) exhibits an angle within said predetermined angular range (±a).

9. The connector according to any one of the preceding claims,
**characterized in that** the first and second connecting members are designed so as to allow an axial rotation of the longitudinal axis of the second concrete element (102; 202; 302) relative to the longitudinal axis of the first concrete element (101; 201; 301) which is no greater than 4.5°, more advantageously no greater than 1.5°, after the interconnection.

10. The connector according to any one of the preceding claims,
**characterized in that** the first (205', 205"; 305', 305") and second (206; 306) connecting members are designed so as to enable a radius of curvature in the second plane (II) which is below 200 metres, preferably between 10 and 25 metres, in a row (103) of laid, interconnected concrete elements.

11. A concrete element for a protective structure for an underwater installation, said concrete element being designed as an elongated, curved shell segment having two ends, a bottom side between the ends designed with a longitudinal cavity for receiving the underwater installation when laying the concrete element, a top side between the ends, and at least two through-going apertures from the top side to the cavity, wherein said concrete element (101, 102; 201, 202; 301, 302) exhibits a second connecting member (206; 306) designed for interconnection with a first connecting member (205', 205"; 305', 305") of a first concrete element (201; 301), in a connector (104; 204; 304) for interconnecting the concrete elements in said protective structure, wherein said connecting members (205', 205", 206; 305', 305", 306) exhibit openings (210', 210", 211; 310") for the insertion of a connecting element (209; 309) for interlocking said connector so as to make the connector articulated in a first plane (I) after the interconnection,
**characterized in**
**that** the second connecting member (206; 306) is designed with at least one rounded body (207; 307', 307") so as to form at least one continuous contact line against a first and/or a second inwardly facing surface of said first connecting member (205', 205"; 305', 305") of the first concrete element (201; 301) and to make the connector articulated in a second plane (II), within a predetermined angular range (±a), wherein said second plane (II) extends at a right angle to the first plane (I), and
**that** the rounded body (207; 307') is provided on a shaft portion (208; 308) of the second connecting member (206; 306) and is adapted to form a first continuous contact line (A; C) against the first inwardly facing surface of said first connecting member (205', 205"; 305', 305") of the first concrete element (201; 301), and the shaft portion (208; 308) is adapted to form a second contact line (B; D) against the second inwardly facing surface of said first connecting member (205', 205"; 305', 305") of the first concrete element (201; 301) when the connector (204; 304) exhibits an angle in the second plane (II) corresponding to an end position of said predetermined angular range (±α) in order to limit an axial rotation of the longitudinal axis of the concrete element (102; 202; 302) relative to the longitudinal axis of the first concrete element (101; 201; 301) so that the axial rotation is smaller than said predetermined angular range (±a).

12. The concrete element according to claim 11,
**characterized in that** the concrete element (201) is of a design which makes the projection of the ends inclined so that the top side becomes longer than the bottom side.

13. The concrete element according to claim 11 or 12,
**characterized in that** the concrete element (201) has a first connecting member (205', 205") arranged at one end, and a second connecting member (206) arranged at the other end.

14. The concrete element according to any one of the claims 11-12,
**characterized in that** said connecting members (205', 205", 206) are formed by, or are attached to, projecting ends of a longitudinal reinforcement element extending inside the concrete element.

15. A method for interconnecting a plurality of concrete elements (101, 102; 201, 202; 301, 302), while using a connector (104; 204; 304) comprising at least one first connecting member of a first concrete element (101; 201; 301) and a second connecting member of a second concrete element (102; 202; 302), wherein said connecting members (205', 205", 206; 305', 305", 306) exhibit openings (210', 210", 211; 310") for the insertion of a connecting element (209; 309) for interlocking said connector so as to make the connector articulated in a first plane (I) after the interconnection,
**characterized in**
**that** the connecting members are designed with a first and a second inwardly facing surface of the first connecting member (205', 205"; 305', 305") and at least one rounded body (207; 307', 307") of the second connecting member (206; 306) so as to form at least one continuous contact line between said inwardly facing surfaces and said rounded body and to make the connector articulated in a second plane (II), within a predetermined angular range (±a), wherein said second plane (II) extends at a right angle to the first plane (I), and
**that** said rounded body (207; 307', 307") is provided on a shaft portion (208; 308) of the second connecting member so as to form a first continuous contact line (A; C) between said first inwardly facing surface of the first connecting member (205"; 305") and said rounded body (207; 307') and so as to form a second contact line (B; D) between said second inwardly facing surface of the first connecting member (205'; 305') and the shaft portion (208; 308) when the connector (204; 304) exhibits an angle in the second plane (II) corresponding to an end position of said predetermined angular range (±α) in order to furthermore limit an axial rotation of the longitudinal axis of the second concrete element (102; 202; 302) relative to the longitudinal axis of the first concrete element (101; 201; 301) so that the axial rotation is smaller than said predetermined angular range (±α),and
**that** at least one of the connecting members (206; 306) exhibits an opening (211) having an elongated shape in a direction which is substantially parallel to an alignment plane, wherein
the method comprises moving the first (205', 205"; 305', 305") and second (206; 306) connecting members to a predefined, preferably parallel-aligned, first position relative to each other in which the second connecting member abuts against the first concrete element and in which the connector (204; 304) is interlocked by inserting said connecting element (209; 309) through the opening, wherein the first (205', 205"; 305', 305") and second (206; 306) connecting members, after the interlocking, can be moved to other positions relative to each other in which the second connecting member has been pulled outward to a distance from the first concrete element and in which the connector (204; 304) exhibits an angle within the predetermined angular range (±α) in the alignment plane.
